# EUROPEAN PATENT APPLICATION

(11) **EP 4 354 894 A1**
(43) Date of publication of application: **17.04.2024**
(21) Application number: 22819349.6
(22) Date of filing: 24.05.2022
(51) Int. Cl.: H04Q 11/00

(54) **SWITCH AND COMMUNICATION SYSTEM**

(30) Priority: 09.06.2021 CN 202110644931
(71) Applicant: Huawei Technologies Co., Ltd., Longgang Shenzhen, Guangdong 518129 (CN)
(72) Inventor: XU, Xing, Shenzhen, Guangdong 518129 (CN); YANG, Yumeng, Shenzhen, Guangdong 518129 (CN); FANG, Liming, Shenzhen, Guangdong 518129 (CN)
(74) Representative: Isarpatent
(86) International application number: PCT/CN2022/094637
(87) International publication number: WO 2022/257751

(57) **Abstract**

Embodiments of this application disclose a switch and a communication system, to reduce costs of the switch and improve scalability of the switch. The switch in embodiments of this application includes a first laser and a first optical splitter. The first laser is configured to provide a first laser light. The first optical splitter is configured to split the first laser light into a first downstream laser light and a second downstream laser light, where the first downstream laser light is used for transmitting information to a first terminal, and the second downstream laser light is used for transmitting information to a second terminal.

## Description

This application claims priority to Chinese Patent Application No. 202110644931.5, filed with the China National Intellectual Property Administration on June 9, 2021 and entitled "SWITCH AND COMMUNICATION SYSTEM", which is incorporated herein by reference in its entirety.

### TECHNICAL FIELD

Embodiments of this application relate to the communication field, and in particular, to a switch and a communication system.

### BACKGROUND

Optical fiber communication features a large capacity, a high rate, anti-electromagnetic interference, and low costs. In a local area network such as a campus network or a vehicle-mounted network, a switch needs to be connected to a plurality of terminals via an optical fiber, to meet a communication requirement. A set of laser light sources needs to be configured on the switch for each terminal to transmit a downstream signal.

However, as a quantity of terminals connected to the switch increases, more and more laser light sources need to be configured on the switch to meet the communication requirement, resulting in high costs.

### SUMMARY

Embodiments of this application provide a switch and a communication system, to reduce costs of the switch and improve scalability of the switch.

According to a first aspect, an embodiment of this application provides a switch, where the switch is applicable to a local area network, and the local area network includes the switch and a first terminal and a second terminal that are connected to the switch. The switch includes a first laser and a first optical splitter, where the first laser is configured to provide a first laser light. An optical splitter is a passive component, and may be configured to couple, branch, and distribute a laser light. Therefore, the first optical splitter may be configured to split the first laser light into a first downstream laser light and a second downstream laser light, where the first downstream laser light is used for transmitting information to the first terminal, and the second downstream laser light is used for transmitting information to the second terminal.

In this embodiment of this application, the switch may separately transmit the information to the first terminal and the second terminal via the first downstream laser light and the second downstream laser light, and there is no need to dispose one laser for each terminal, so that costs are greatly reduced. In addition, because a quantity of lasers is reduced, scalability of the switch is improved.

In a possible implementation, the switch further includes a second laser and a second optical splitter. The second laser is configured to provide a second laser light; and the second optical splitter is configured to split the second laser light into a third laser light and a fourth laser light. The third laser light is transmitted to the first terminal, and the fourth laser light is transmitted to the second terminal. The third laser light is used by the first terminal to load information onto the third laser light, to obtain a third laser light onto which the information is loaded. The fourth laser light is used by the second terminal to load information onto the fourth laser light, to obtain a fourth laser light onto which the information is loaded. The third laser light onto which the information is loaded is used by the first terminal to transmit the information to the switch. The fourth laser light onto which the information is loaded is used by the second terminal to transmit the information to the switch.

In this embodiment of this application, the switch may further provide the third laser light and the fourth laser light, to enable the first terminal to transmit the information to the switch based on the third laser light, and the second terminal to transmit the information to the switch based on the fourth laser light. Therefore, transmitting the information from the terminal to the switch can also be implemented without disposing a laser on the terminal. This reduces costs and power loss that are of the terminal.

In a possible implementation, the switch further includes a first input/output block and a second input/output block. The first input/output block is configured to transmit the first downstream laser light to the first terminal, where no laser is disposed in the first input/output block; and the second input/output block is configured to transmit the second downstream laser light to the second terminal, where no laser is disposed in the second input/output block. Alternatively, the first input/output block is configured to transmit the first downstream laser light to the first terminal, and transmit the third laser light to the first terminal, where no laser is disposed in the first input/output block; and the second input/output block is configured to transmit the second downstream laser light to the second terminal, and transmit the fourth laser light to the second terminal, where no laser is disposed in the second input/output block.

In this embodiment of this application, the input/output block of the switch does not include a laser, thereby reducing costs of the switch.

In a possible implementation, because the first laser and the second laser need to provide laser lights for a plurality of terminals, the first laser and the second laser require high power, and generate high heat. Therefore, the switch further includes a first heat dissipater and a second heat dissipater. The first heat dissipater is configured to dissipate heat for the first laser, and the second heat dissipater is configured to dissipate heat for the second laser.

In this embodiment of this application, the first heat dissipater and the second heat dissipater may separately dissipate heat for the first laser and the second laser, which improves working stability of the switch.

According to a second aspect, an embodiment of this application provides a switch, where the switch is applied to a local area network, and the local area network includes the switch and a terminal connected to the switch. The switch includes a second laser, where the second laser is configured to send a second laser light, and the second laser light is transmitted to the terminal, to enable the terminal to load information onto the second laser light, to obtain a second laser light onto which the information is loaded, and the second laser light onto which the information is loaded is used by the terminal to transmit the information to the switch.

In this embodiment of this application, the switch sends the second laser light to the terminal, so that the terminal can transmit the information to the switch based on the second laser light. Therefore, a laser does not need to be disposed on the terminal. This reduces costs and power loss that are of the terminal.

In a possible implementation, the second laser continuously sends the second laser light.

According to a third aspect, an embodiment of this application provides a switch, where the switch is applicable to a local area network, and the local area network includes the switch and a first terminal and a second terminal that are connected to the switch. The switch includes a second laser and a second optical splitter. The second laser is configured to provide a second laser light; and the second optical splitter is configured to split the second laser light into a third laser light and a fourth laser light. The third laser light is transmitted to the first terminal, and the fourth laser light is transmitted to the second terminal. The third laser light is used by the first terminal to load information onto the third laser light, to obtain a third laser light onto which the information is loaded. The fourth laser light is used by the second terminal to load information onto the fourth laser light, to obtain a fourth laser light onto which the information is loaded. The third laser light onto which the information is loaded is used by the first terminal to transmit the information to the switch, and the fourth laser light onto which the information is loaded is used by the second terminal to transmit the information to the switch.

In this embodiment of this application, the switch splits the second laser light into the third laser light and the fourth laser light through the second optical splitter. Therefore, there is no need to dispose one second laser corresponding to each terminal. This reduces costs of the switch and improves scalability of the switch.

In a possible implementation, the second laser continuously sends the second laser light.

According to a fourth aspect, an embodiment of this application provides a terminal, where the terminal includes a reflective film and a signal modulation apparatus. The reflective film is configured to reflect a fifth laser light from a switch, to enable the fifth laser light to be transmitted to the switch. After the fifth laser light is reflected, the signal modulation apparatus loads information onto the fifth laser light, to obtain a fifth laser light onto which the information is loaded. The fifth laser light onto which the information is loaded is used by the terminal to transmit the information to the switch.

In a possible implementation, the signal modulation apparatus may be an electro-absorption modulator or a microring.

In a possible implementation, no information is loaded onto the fifth laser light.

In this embodiment of this application, the terminal may load the information onto the fifth laser light from the switch, and send, through the reflective film to the switch, the fifth laser light onto which the information is loaded. Therefore, a function of transmitting the information to the switch can also be implemented without disposing a laser on the terminal.

According to a fifth aspect, an embodiment of this application provides a communication system, where the communication system includes the switch and the terminal according to the first aspect, and the switch is connected to the terminal.

According to a sixth aspect, an embodiment of this application provides a communication system, where the communication system includes the switch according to the second aspect and the terminal according to the third aspect, and the switch is connected to the terminal.

According to a seventh aspect, an embodiment of this application provides a communication system, where the communication system includes the switch according to the third aspect and the terminal according to the third aspect, and the switch is connected to the terminal.

According to an eighth aspect, an embodiment of this application provides a communication method, where the communication method is applicable to a switch, the switch is applicable to a local area network, the local area network includes the switch, a first terminal, and a second terminal, and the first terminal and the second terminal are connected to the switch. A first laser light is provided, and the first laser light is split into a first downstream laser light and a second downstream laser light, where the first downstream laser light is used for transmitting information to the first terminal, and the second downstream laser light is used for transmitting information to the second terminal.

In this embodiment of this application, the switch may separately transmit the information to the first terminal and the second terminal via the first downstream laser light and the second downstream laser light, and there is no need to dispose one laser for each terminal, so that costs greatly reduced. In addition, because a quantity of lasers is reduced, scalability of the switch is improved.

In a possible implementation, a second laser light may be further provided, and the second laser light is split into a third laser light and a fourth laser light. The third laser light is transmitted to the first terminal, and the fourth laser light is transmitted to the second terminal. The third laser light is used by the first terminal to load information onto the third laser light, to obtain a third laser light onto which the information is loaded. The fourth laser light is used by the second terminal to load information onto the fourth laser light, to obtain a fourth laser light onto which the information is loaded. The third laser light onto which the information is loaded is used by the first terminal to transmit the information to the switch, and the fourth laser light onto which the information is loaded is used by the second terminal to transmit the information to the switch.

In this embodiment of this application, the switch may further provide the third laser light and the fourth laser light, to enable the first terminal to transmit the information to the switch based on the third laser light, and the second terminal to transmit the information to the switch based on the fourth laser light. Therefore, transmitting the information from the terminal to the switch can also be implemented without disposing a laser on the terminal. This reduces costs and power loss that are of the terminal.

According to a seventh aspect, an embodiment of this application provides a communication method, where the communication method is applicable to a switch, the switch is applied to a local area network, and the local area network includes the switch and a terminal connected to the switch. A second laser light is first provided, and the second laser light is transmitted to the terminal, and is used by the terminal to load information onto the second laser light, to obtain a second laser light onto which the information is loaded, and the second laser light onto which the information is loaded is used by the terminal to transmit the information to the switch.

In this embodiment of this application, the switch provides the second laser light to the terminal, so that the terminal can transmit the information to the switch based on the second laser light. Therefore, a laser does not need to be disposed on the terminal. This reduces costs and power loss that are of the terminal.

In a possible implementation, the second laser light is continuously sent.

According to a ninth aspect, an embodiment of this application provides a communication method, where the communication method is applicable to a switch, the switch is applicable to a local area network, the local area network includes the switch, a first terminal, and a second terminal, and the first terminal and the second terminal are connected to the switch. A second laser light is provided, and the second laser light is split into a third laser light and a fourth laser light. The third laser light is transmitted to the first terminal, and the fourth laser light is transmitted to the second terminal. The third laser light is used by the first terminal to load information onto the third laser light, to obtain a third laser light onto which the information is loaded. The fourth laser light is used by the second terminal to load information onto the fourth laser light, to obtain a fourth laser light onto which the information is loaded. The third laser light onto which the information is loaded is used by the first terminal to transmit the information to the switch, and the fourth laser light onto which the information is loaded is used by the second terminal to transmit the information to the switch.

In this embodiment of this application, the switch splits the second laser light into the third laser light and the fourth laser light through a second optical splitter. Therefore, there is no need to dispose one second laser corresponding to each terminal. This reduces costs of the switch and improves scalability of the switch.

In a possible implementation, the second laser light is continuously sent.

According to a tenth aspect, an embodiment of this application provides a communication method, where the communication method is applied to a terminal. A fifth laser light from a switch is reflected, to enable the fifth laser light to be transmitted to the switch, and then information is loaded onto the reflected fifth laser light, to obtain a fifth laser light onto which the information is loaded. The fifth laser light onto which the information is loaded is used for transmitting the information to the switch.

In a possible implementation, no information is loaded onto the fifth laser light.

In this embodiment of this application, the terminal may load the information onto the fifth laser light from the switch, and send the fifth laser light onto which the information is loaded to the switch. Therefore, a function of transmitting the information to the switch can also be implemented without disposing a laser on the terminal.

### BRIEF DESCRIPTION OF DRAWINGS

FIG. 1 is a schematic diagram of an architecture of a local area network according to an embodiment of this application;
FIG. 2 is a schematic diagram of a structure of a switch according to an embodiment of this application;
FIG. 3 is a schematic diagram of another structure of a switch according to an embodiment of this application;
FIG. 4 is a schematic diagram of a structure of a terminal according to an embodiment of this application;
FIG. 5 is a schematic diagram of a communication system according to an embodiment of this application;
FIG. 6 is a schematic diagram of another structure of a switch according to an embodiment of this application;
FIG. 7 is a schematic diagram of another communication system according to an embodiment of this application;
FIG. 8 is a schematic diagram of another structure of a switch according to an embodiment of this application;
FIG. 9 is a schematic diagram of another communication system according to an embodiment of this application;
FIG. 10 is a schematic flowchart of a communication method according to an embodiment of this application;
FIG. 11 is another schematic flowchart of a communication method according to an embodiment of this application;
FIG. 12 is a schematic flowchart of another communication method according to an embodiment of this application; and
FIG. 13 is a schematic flowchart of another communication method according to an embodiment of this application.

### DESCRIPTION OF EMBODIMENTS

The following describes embodiments of this application with reference to accompanying drawings. It is clear that the described embodiments are merely a part but not all of embodiments of this application. A person of ordinary skill in the art may learn that, as technologies develop and new scenarios emerge, technical solutions provided in embodiments of this application are also applicable to a similar technical problem.

In the specification, claims, and the accompanying drawings of this application, terms such as "first" and "second" are used for distinguishing between similar objects but are not necessarily used for describing a specific order or sequence. It should be understood that data used in such a way is interchangeable in proper circumstances, so that embodiments described herein can be implemented in other orders than the orders illustrated or described herein. In addition, terms such as "include", "have" and any other variants are intended to cover the non-exclusive inclusion. For example, a process, method, system, product, or device that includes a list of steps or units is not necessarily limited to those expressly listed steps or units, but may include other steps or units not expressly listed or inherent to the process, method, product, or device.

Embodiments of this application provide a switch and a communication system, to reduce laser light sources configured on the switch and meet a normal communication requirement.

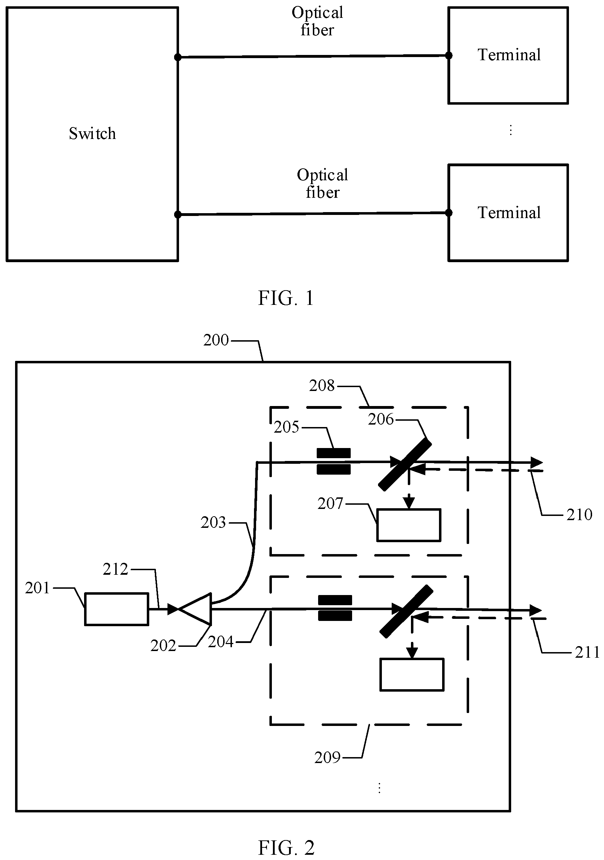

Embodiments of this application are applicable to a communication architecture of a local area network. Refer to FIG. 1, in the communication architecture of the local area network, a switch usually needs to be simultaneously connected to a plurality of terminals via an optical fiber, and the switch may provide an interworking network for the terminals that access the switch.

Refer to FIG. 2. The following describes a structure of a switch according to an embodiment of this application.

As shown in FIG. 2, the switch 200 in this embodiment of this application includes a first laser 201, a first optical splitter 202, a first input/output block 208, and a second input/output block 209.

The first laser 201 is configured to provide a first laser light, and the first laser light is transmitted to the first optical splitter 202.

The first optical splitter 202 splits a first laser light 212 into a first downstream laser light 203 and a second downstream laser light 204.

The first downstream laser light 203 is transmitted to the first input/output block 208, and the second downstream laser light 204 is transmitted to the second input/output block 209. The first input/output block 208 includes an electro-absorption modulator 205, a wavelength division multiplexing optical splitter 206, and a PIN diode 207. The electro-absorption modulator 205 loads information onto the first downstream laser light 203, where the first downstream laser light 203 onto which the information is loaded passes through the wavelength division multiplexing optical splitter 206, and is transmitted, via an optical fiber, to a first terminal connected to the switch. The second input/output block 209 is similar to the first input/output block 208, and details are not described herein again.

A processing process performed by the second input/output block 209 on the second downstream laser light 204 is similar to a processing process performed on the first input/output block 208 for the first downstream laser light 203, and details are not described herein again. The second downstream laser light 204 is transmitted, via the optical fiber, to a second terminal connected to the switch.

During actual implementation, when N terminals are connected to the switch, where N is an integer greater than 2, the first optical splitter 202 may alternatively split the first laser light 201 into N downstream laser lights. Correspondingly, N input/output blocks are disposed on the switch 200, structures of the N input/output blocks are similar, and the N downstream laser lights respectively pass through the N input/output blocks, to be transmitted to the N terminals.

The foregoing describes a manner in which the switch 200 sends downstream information, and the following describes a manner in which the switch 200 receives upstream information from a terminal.

The first input/output block 208 receives an upstream laser light 210 sent by the first terminal through a directly modulated laser, and the second input/output block 209 receives an upstream laser light 211 sent by a second terminal through a directly modulated laser, where information is loaded onto the upstream laser light 210 and the upstream laser light 211. The first input/output block 208 is used as an example. The upstream laser light 210 is transmitted to the PIN diode 207 through the wavelength division multiplexing optical splitter 206, and the PIN diode 207 converts the upstream laser light 210 into information. Therefore, receiving of the upstream information is implemented. A manner in which the second input/output block 209 processes the upstream laser light 211 is similar to a manner in which the first input/output block 208 processes the upstream laser light 210, and details are not described herein again.

Optionally, a standby first laser may further be disposed in the switch in this embodiment of this application. When the first laser is faulty or has low operating power, switching to the standby first laser is performed, to ensure normal operation of the switch. The standby first laser is similar to the first laser, and details are not described herein again.

Optionally, because information needs to be transmitted to a plurality of terminals simultaneously, the first laser 201 requires high power, and is prone to overheating. Therefore, a first heat dissipater may further be disposed in the switch 200, where the first heat dissipater is configured to dissipate heat for the first laser 201.

It should be noted that, during actual implementation, the electro-absorption modulator 205 may alternatively be replaced with a microring. This is not limited herein.

In this embodiment of this application, the switch splits the first laser light into at least two downstream laser light through the first optical splitter, to transmit the information to the terminal. This reduces a quantity of configured lasers and improves scalability of the switch.

An embodiment of this application provides a communication system, where the communication system includes a switch and a terminal. The switch is similar to the switch 200 in the embodiment shown in FIG. 2, the terminal is similar to the first terminal and the second terminal in the embodiment shown in FIG. 2, and details are not described herein again.

The foregoing describes a structure of the switch in embodiments of this application. Based on the embodiment shown in FIG. 2, the switch may alternatively provide a laser light source for the terminal, and the terminal reflects the laser light source and loads information onto the laser light source. Therefore, transmission of upstream information is implemented.

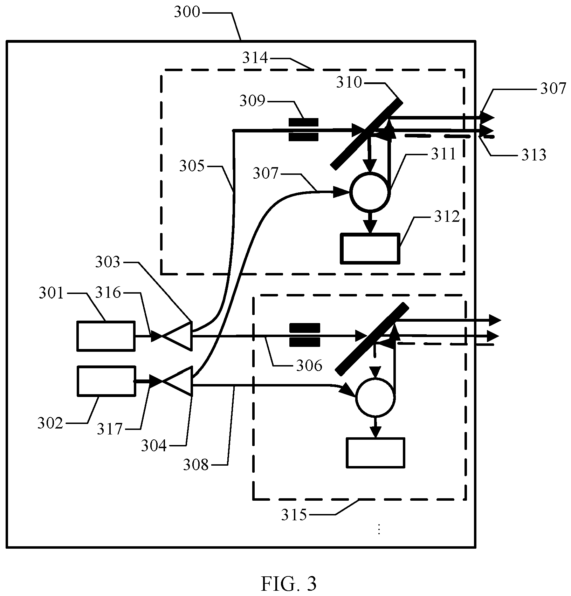

Refer to FIG. 3. The following describes another structure of a switch 300 according to an embodiment of this application.

As shown in FIG. 3, the another structure of the switch 300 in this embodiment of this application includes a first laser 301, a second laser 302, a first optical splitter 303, a second optical splitter 304, a first input/output block 314, and a second input/output block 315.

The first laser 301 is configured to provide a first laser light 316. The first laser 301 is similar to the first laser 201 in the embodiment shown in FIG. 2, the first optical splitter 303 is similar to the first optical splitter 202 in the embodiment shown in FIG. 2, a first downstream laser 305 is similar to the first downstream laser light 203 in the embodiment shown in FIG. 2, a second downstream laser light 306 is similar to the second downstream laser light 204 in the embodiment shown in FIG. 2, and details are not described herein again.

The second laser 302 is configured to provide a second laser light 317, the second optical splitter 304 is configured to split the second laser light 317 into a third laser light 307 and a fourth laser light 308, and neither the third laser light 307 nor the fourth laser light 308 is loaded with information.

The third laser light 307 is transmitted to the first input/output block 314, and the fourth laser light 308 is transmitted to the second input/output block 315. The first input/output block 314 includes an electro-absorption modulator 309, a wavelength division multiplexing optical splitter 310, a circulator 311, and a PIN diode 312. The electro-absorption modulator 309 is similar to the electro-absorption modulator 205 in the embodiment shown in FIG. 2, and details are not described herein again. The second input/output block 315 is similar to the first input/output block 314, and details are not described herein again.

The third laser light 307 is transmitted to the circulator 311, and is transmitted to the wavelength division multiplexing optical splitter 310 through the circulator 311. The wavelength division multiplexing optical splitter 310 reflects the third laser light 307, and the third laser light 307 is finally transmitted to a first terminal via an optical fiber.

After receiving the third laser light 307, the first terminal reflects the third laser light 307 via a reflective film, to enable the third laser light 307 to be transmitted to the switch 300, and then loads information onto the third laser light 307, to obtain a third laser light 313 onto which the information is loaded. The third laser light 313 onto which the information is loaded is reflected by the wavelength division multiplexing optical splitter 310 to the circulator 311, and is transmitted to the PIN diode 312 through the circulator 311. The PIN diode 312 converts, into an electrical signal, the third laser light 313 onto which the information is loaded. Therefore, transmission of upstream information is implemented.

It should be noted that, during actual implementation, the second laser 302 continuously provides the second laser light 317.

A processing process performed by the second input/output block 315 for the fourth laser light 308 is similar to a processing process performed by the first input/output block 314 for the third laser light 307, and details are not described herein again. A second sub-laser light 308 is transmitted, via an optical fiber, to a second terminal connected to the switch.

During actual implementation, when N terminals are connected to the switch, the second optical splitter 304 may alternatively split the second laser light 302 into N laser lights. Correspondingly, N input/output blocks are disposed on the switch 200, structures of the N input/output blocks are similar, and the N laser lights respectively pass through the N input/output blocks, to be transmitted to the N terminals.

Optionally, a standby second laser may further be disposed in the switch in this embodiment of this application. When the second laser is faulty or has low operating power, switching to the standby second laser is performed, to ensure normal operation of the switch. The standby second laser is similar to the second laser, and details are not described herein again.

Optionally, because a laser light needs to be provided to a plurality of terminals simultaneously, the second laser 302 requires high power, and is prone to overheating. Therefore, a second heat dissipater may further be disposed in the switch 200, where the second heat dissipater is configured to dissipate heat for the second laser 302.

It should be noted that, during actual implementation, a first heat dissipater and the second heat dissipater may be two independent heat dissipaters. Alternatively, only one of the heat dissipaters may be retained to dissipate heat for both the first laser and the second laser. This is not limited herein.

It should be noted that, during actual implementation, the electro-absorption modulator 309 may alternatively be replaced with a microring. This is not limited herein.

In this embodiment of this application, the switch may further provide a laser light for a terminal, so that the terminal can transmit information to the switch based on the laser light. Therefore, a laser does not need to be disposed on the terminal. This reduces costs and power loss that are of the terminal.

The foregoing describes the switch 300 in embodiments of this application, and the following describes a terminal in embodiments of this application.

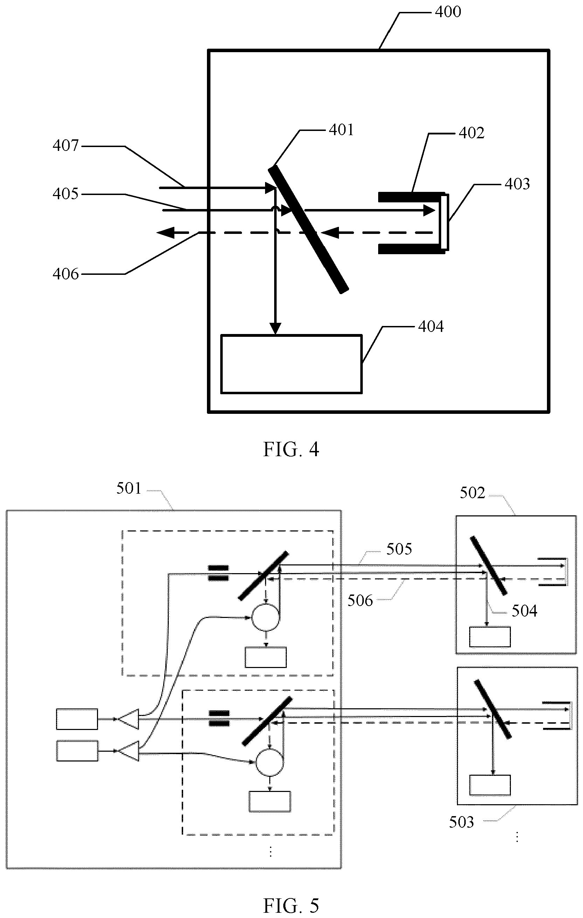

Refer to FIG. 4. The terminal 400 according to an embodiment of this application includes a wavelength division multiplexing optical splitter 401, a signal modulation apparatus 402, a reflective film 403, and a PIN diode 404.

The terminal 400 receives a fifth laser light 405 from a switch via an optical fiber, where no information is loaded onto the fifth laser light 405. The fifth laser light 405 passes through the wavelength division multiplexing optical splitter 401, to be transmitted to the reflective film 403. The reflective film 403 reflects the fifth laser light 405, to enable the fifth laser light 405 to be transmitted to the switch, and then, the signal modulation apparatus 402 loads information onto the fifth laser light 405, to obtain a fifth laser light 406 onto which the information is loaded. The fifth laser light 406 onto which the information is loaded is transmitted to the switch via the optical fiber. Therefore, transmission of upstream information is implemented.

It should be noted that, the signal modulation apparatus may be an electro-absorption modulator, or may be a microring. This is not limited herein.

The terminal 400 may further receive a downstream laser light 407 from the switch via the optical fiber, information is loaded onto the downstream laser light 407, the downstream laser light 407 is reflected by the wavelength division multiplexing optical splitter 401 to the PIN diode 404, and the PIN diode 404 converts the downstream laser light 407 into an electrical signal. Therefore, transmission of downstream information is implemented.

In this embodiment of this application, the terminal may load the information onto the fifth laser light generated by the switch, and transmit the information to the switch based on a third laser light onto which the information is loaded. No additional laser needs to be disposed. This reduces costs of the terminal and power loss of the terminal.

Refer to FIG. 5. An embodiment of this application provides a communication system. As shown in FIG. 5, the communication system includes a switch 501 and a terminal. For example, the terminal includes a terminal 502 and a terminal 503. The switch 501 is similar to the switch 300 in the embodiment shown in FIG. 3, and details are not described herein again. The terminal 502 and the terminal 503 are similar to the terminal 400 in the embodiment shown in FIG. 4, and details are not specifically described herein again. The terminal 502 is used as an example to describe the communication system. The terminal 502 receives a first downstream laser light 504 from the switch 501, to implement transmission of a downstream signal. The terminal 502 receives a fifth laser light 505 from the switch 501, and loads information onto the fifth laser light 505, to obtain a fifth laser light 506 onto which the information is loaded. Based on the fifth laser light 506 onto which the information is loaded, transmission of upstream information is implemented. It may be understood that, in the communication system, the fifth laser light 505 is similar to the third laser light 405 in the embodiment shown in FIG. 4, and the first downstream laser light 504 is similar to the downstream laser light 407 in the embodiment shown in FIG. 4.

It may be understood that, in the communication system, a larger quantity of terminals may be included. A manner in which the switch 501 interacts with another terminal is similar to a manner in which the switch interacts with the terminal 502, and details are not described herein again.

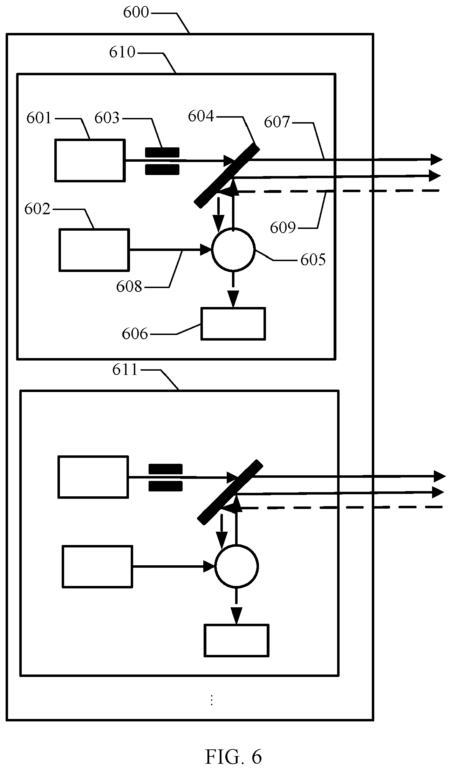

Refer to FIG. 6. An embodiment of this application provides another structure of a switch.

As shown in FIG. 6, a switch 600 in this embodiment of this application includes a first input/output block 610 and a second input/output block 611.

The first input/output block 610 is used as an example, where the first input/output block 610 includes a first laser 601, a second laser 602, an electro-absorption modulator 603, a wavelength division multiplexing optical splitter 604, a circulator 605, and a PIN diode 606.

The first laser 601 is configured to provide a first laser light 607. The electro-absorption modulator 603 loads information onto the first laser light 607, and a first laser light 607 onto which the information is loaded passes through the wavelength division multiplexing optical splitter 604, and is transmitted to a first terminal via an optical fiber. Therefore, transmission of downstream information is implemented.

The second laser 602 is configured to provide a second laser light 608. The second laser light 608 is transmitted to the wavelength division multiplexing optical splitter 604 through the circulator 605, and the wavelength division multiplexing optical splitter 604 reflects the second laser light 608, to enable the second laser light 608 to be transmitted to the first terminal via an optical fiber. After receiving the second laser light 608, the first terminal reflects the second laser light 608 via a reflective film, to enable the second laser light 608 to be transmitted in a direction of the switch 600, and then loads information onto the second laser light 608, to obtain a second laser light 609 onto which the information is loaded. Therefore, transmission of upstream information is implemented.

It should be noted that, during actual implementation, the second laser continuously provides the second laser light 608.

It should be noted that the second input/output block 611 is similar to the first input/output block 610, and details are not described herein again. It may be understood that the second input/output block 611 may interact with a corresponding second terminal, where a specific interaction manner is similar to an interaction manner between the first input/output block 610 and the first terminal, and details are not described herein again.

During actual implementation, when N terminals are connected to the switch, corresponding N input/output blocks may be disposed on the switch 600, to implement interaction with the N terminals, where structures of the N input/output blocks are similar.

It should be noted that, during actual implementation, the electro-absorption modulator 603 may alternatively be replaced with a microring. This is not limited herein.

Optionally, each input/output block in the switch 600 may further include a first standby laser and a second standby laser. When the first laser is faulty or has low operating power, the standby first laser replaces the first laser to work. When the second laser is faulty or has low operating power, the standby second laser replaces the first laser to work. The standby first laser is similar to the first laser, the standby second laser is similar to the second laser, and details are not described herein again.

Optionally, each input/output block in the switch 600 may further include a first heat dissipater and a second heat dissipater. The first heat dissipater is configured to dissipate heat for the first laser, and the second heat dissipater is configured to dissipate heat for the second laser.

It should be noted that, during actual implementation, the first heat dissipater and the second heat dissipater may be two independent heat dissipaters. Alternatively, only one of the heat dissipaters may be retained to dissipate heat for both the first laser and the second laser. This is not specifically limited herein.

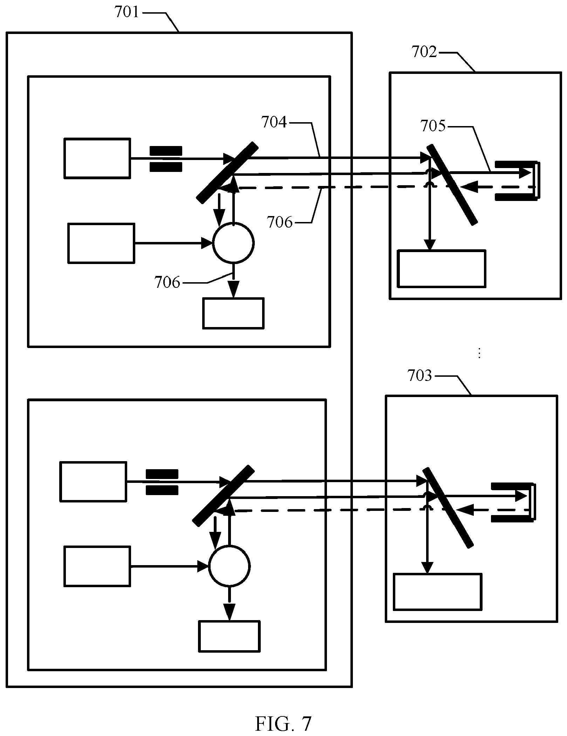

Refer to FIG. 7. An embodiment of this application further provides a communication system. As shown in FIG. 7, the communication system includes a switch 701 and a terminal. For example, the terminal includes a terminal 702 and a terminal 703. The switch 701 is similar to the switch 600 in the embodiment shown in FIG. 6, and details are not described herein again. The terminal 702 and the terminal 703 are similar to the terminal 400 in the embodiment shown in FIG. 4, and details are not described herein again.

The terminal 702 is used as an example to describe the communication system. The terminal 702 receives a first laser light 704 from the switch 700, to implement transmission of a downstream signal. The terminal 702 receives a second laser light 705 from the switch 700, and loads information onto the second laser light 705, to obtain a second laser light 706 onto which the information is loaded. Based on the second laser light 706 onto which the information is loaded, transmission of upstream information is implemented. It may be understood that, in the communication system, the second laser light 705 is similar to the fifth laser light 405 in the embodiment shown in FIG. 4, and the first laser light 704 is similar to the downstream laser light 407 in the embodiment shown in FIG. 4.

It may be understood that, in the communication system, an interaction manner between the switch 700 and the terminal 703 is similar to an interaction manner between the switch and the terminal 702, and details are not described herein again.

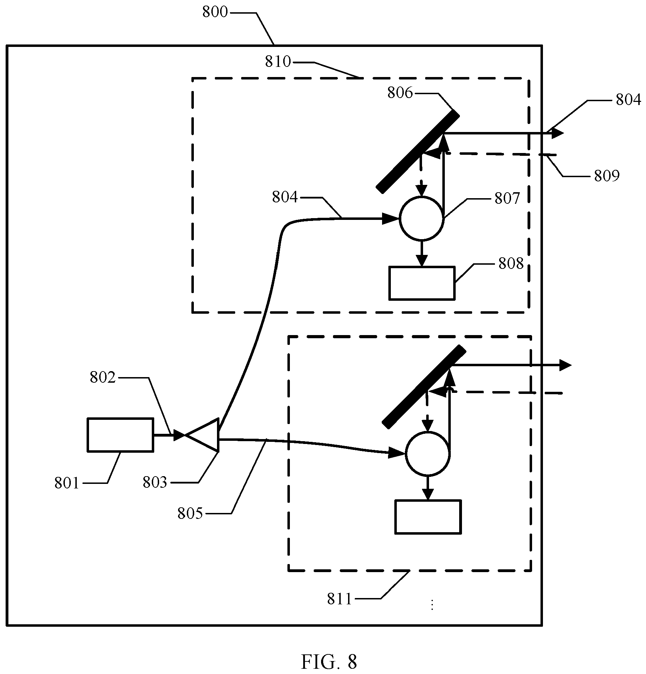

Refer to FIG. 8. An embodiment of this application provides another structure of a switch.

As shown in FIG. 8, the switch 800 includes a second laser 801, a second optical splitter 803, a first input/output block 810, and a second input/output block 811.

The second laser 801 is configured to provide a second laser light 802, and the second laser light 802 is transmitted to the second optical splitter 803. The second optical splitter 803 splits the second laser light 802 into a third laser light 804 and a fourth laser light 805.

The third laser light 804 is transmitted to the first input/output block 810. The first input/output block 810 includes a wavelength division multiplexing optical splitter 806, a circulator 807, and a PIN diode 808. The third laser light 804 is transmitted to the circulator 807, and is transmitted to the wavelength division multiplexing optical splitter 806 through the circulator 807. The wavelength division multiplexing optical splitter 806 reflects a second sub-laser light 804 to an optical fiber, and the third laser light 804 is transmitted to a first terminal via the optical fiber.

After the third laser light 804 is transmitted to the first terminal, the first terminal loads information onto the third laser light 804, to obtain a third laser light 809 onto which the information is loaded. The third laser light 809 onto which the information is loaded is transmitted from the first terminal to the first input/output block 810, and passes through the wavelength division multiplexing optical splitter 806 and the circulator 807, to be transmitted to the PIN diode 808. The PIN diode 808 converts, into an electrical signal, the third laser light 809 onto which the information is loaded. Therefore, transmission of upstream information is completed.

It should be noted that, during actual implementation, the second laser 801 continuously provides the second laser light 802.

It should be noted that, the second input/output block 811 is similar to the first input/output block 810, processing performed by the second input/output block 811 on the fourth laser light 805 is similar to processing performed by the first input/output block 810 on the third laser light 804, processing performed by a second terminal on the fourth laser light 805 is similar to processing performed by the first terminal on the third laser light 804, and details are not described herein again.

During actual implementation, when N terminals are connected to the switch, the second optical splitter 802 may alternatively split the second laser light 801 into N laser lights. Correspondingly, N input/output blocks are disposed on the switch 800, structures of the N input/output blocks are similar, and the N laser lights respectively pass through the N input/output blocks, to be transmitted to the N terminals.

Optionally, each input/output block in the switch 800 may further include a second standby laser. When the second laser is faulty or has low operating power, the standby second laser replaces the first laser to work.

Optionally, each input/output block in the switch 800 may further include a second heat dissipater. The second heat dissipater is configured to dissipate heat for the second laser.

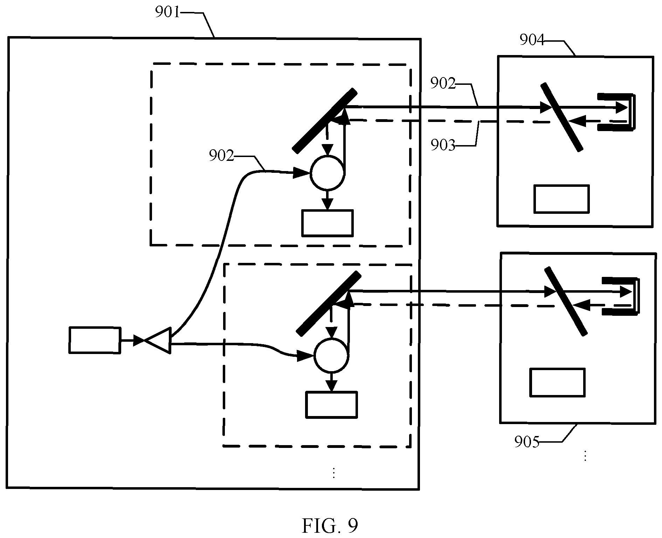

Refer to FIG. 9. An embodiment of this application further provides a communication system. As shown in FIG. 9, the communication system includes a switch 901 and a terminal. For example, the terminal includes a terminal 904 and a terminal 905. The switch 901 is similar to the switch 800 in the embodiment shown in FIG. 8, and details are not described herein again. The terminal 904 and the terminal 905 are similar to the terminal 400 in the embodiment shown in FIG. 4, and details are not described herein again.

The terminal 904 is used as an example to describe the communication system. The terminal 904 receives a third laser light 902 from the switch 901, and loads information onto the third laser light 902, to obtain a third laser light 903 onto which the information is loaded. Based on the third laser light 903 onto which the information is loaded, transmission of upstream information is implemented. It may be understood that, in the communication system, the third laser light 903 is similar to the third laser light 405 in the embodiment shown in FIG. 4.

It may be understood that, in the communication system, an interaction manner between the switch 901 and the terminal 905 is similar to an interaction manner between the switch and the terminal 904, and details are not described herein again.

The foregoing describes the switch and the communication system in embodiments of this application, and the following describes a communication method in embodiments of this application.

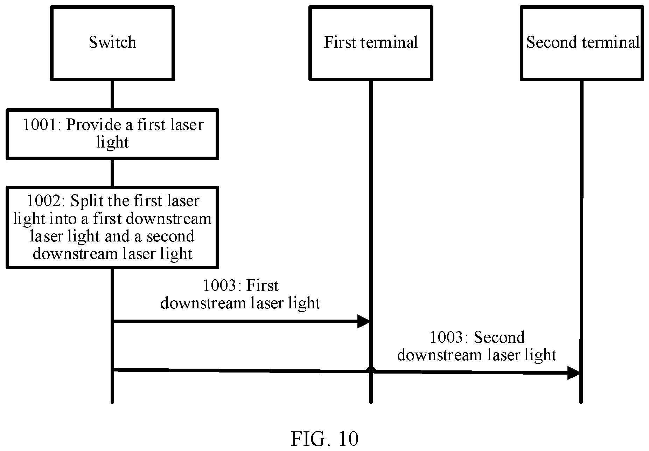

Refer to FIG. 10. A communication method according to an embodiment of this application is applicable to a switch, and a procedure of the communication method includes the following steps.

1001: The switch provides a first laser light.

The switch provides the first laser light, where the first laser light is used for information transmission.

1002: The switch splits the first laser light into a first downstream laser light and a second downstream laser light.

The switch splits the first laser light into the first downstream laser light and the second downstream laser light.

1003: The switch sends the first downstream laser light to a first terminal, and sends the second downstream laser light to a second terminal.

After obtaining the first downstream laser light and the second downstream laser light, the switch loads information onto the first downstream laser light and the second downstream laser light, sends the first downstream laser light to the first terminal, and sends the second downstream laser light to the second terminal.

In this embodiment of this application, the first laser light is split into at least two downstream laser lights, to transmit the information to the terminal. This reduces a quantity of configured lasers and improves scalability of the switch.

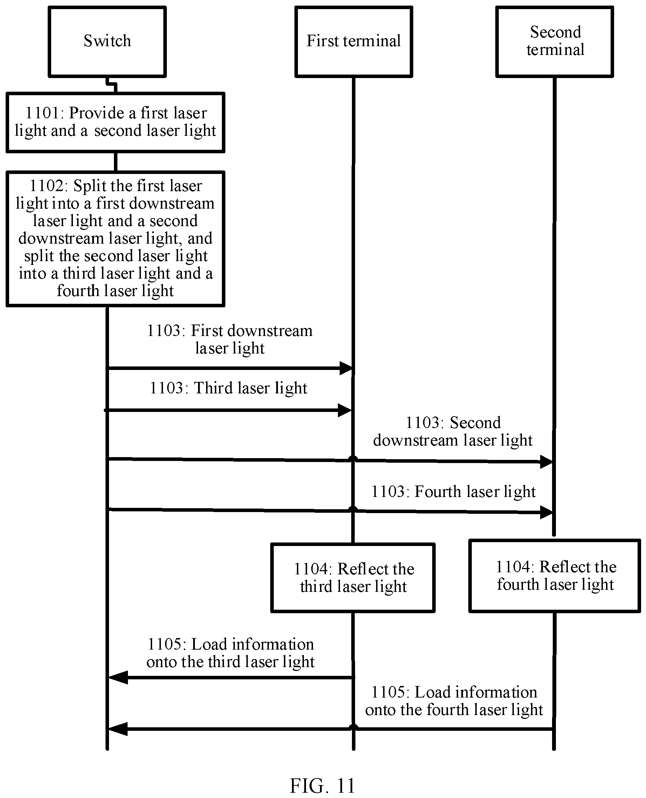

Refer to FIG. 11. The following describes another procedure of a communication method according to an embodiment of this application.

1101: A switch provides a first laser light and a second laser light.

The switch provides the first laser light and the second laser light, where the first laser light and the second laser light are used for information transmission.

1102: The switch splits the first laser light into a first downstream laser light and a second downstream laser light, and splits the second laser light into a third laser light and a fourth laser light.

After obtaining the first laser light and the second laser light, the first laser light is split into the first downstream laser light and the second downstream laser light, and the second laser light is split into the third laser light and the fourth laser light.

1103: The switch sends the first downstream laser light and the third laser light to a first terminal, and sends the second downstream laser light and the fourth laser light to a second terminal.

After obtaining the first downstream laser light, the second downstream laser light, the third laser light, and the fourth laser light, the switch loads information onto the first downstream laser light and the second downstream laser light, sends the first downstream laser light and the third laser light to the first terminal, and sends the second downstream laser light and the fourth laser light to the second terminal.

1104: The first terminal reflects the third laser light, and the second terminal reflects the fourth laser light.

The first terminal and the second terminal respectively receive the first downstream laser light and the second downstream laser light. Therefore, transmission of a downstream signal is implemented. In addition, the first terminal reflects the third laser light, to enable the third laser light to be transmitted in a direction of the switch, and the second terminal reflects the fourth laser light, to enable the fourth laser light to be transmitted in the direction of the switch.

1105: The first terminal loads information onto the third laser light, and the second terminal loads information onto the fourth laser light.

After transmission directions of the third laser light and the fourth laser light change, the first terminal loads the information onto the third laser light to obtain a third laser light onto which the information is loaded, and the second terminal loads the information onto the fourth laser light to obtain a fourth laser light onto which the information is loaded. Therefore, transmission of an upstream signal is implemented. It may be understood that, in this embodiment, the third laser light and the fourth laser light are the same as a fifth laser light.

It should be noted that the second laser light is continuously provided.

In this embodiment of this application, the switch may further provide a laser light for a terminal, to enable the terminal to load the information onto the laser light, to transmit the information to the switch. Therefore, a laser does not need to be disposed on the terminal. This reduces costs and power loss that are of the terminal.

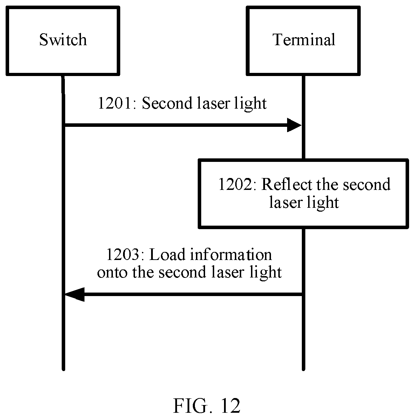

Refer to FIG. 12. The following describes a procedure of another communication method according to an embodiment of this application. The communication method is applicable to a switch.

1201: A second laser light is sent to a terminal.

The switch sends the second laser light to the terminal, where no information is loaded onto the second laser light.

1202: The terminal reflects the second laser light.

The terminal reflects the second laser light, to enable the second laser light to be transmitted in a direction of the switch. It may be understood that, in this embodiment, the second laser light is the same as a fifth laser light.

1203: The terminal loads information onto the second laser light.

After a transmission direction of the second laser light changes, the terminal loads the information onto the second laser light, to obtain a second laser light onto which the information is loaded. Therefore, transmission of an upstream signal is implemented.

It should be noted that the second laser light is continuously provided.

In this embodiment of this application, the switch may further provide a second laser light for a terminal, so that the terminal can transmit the information to the switch based on the second laser light. Therefore, a laser does not need to be disposed on the terminal. This reduces costs and power loss that are of the terminal.

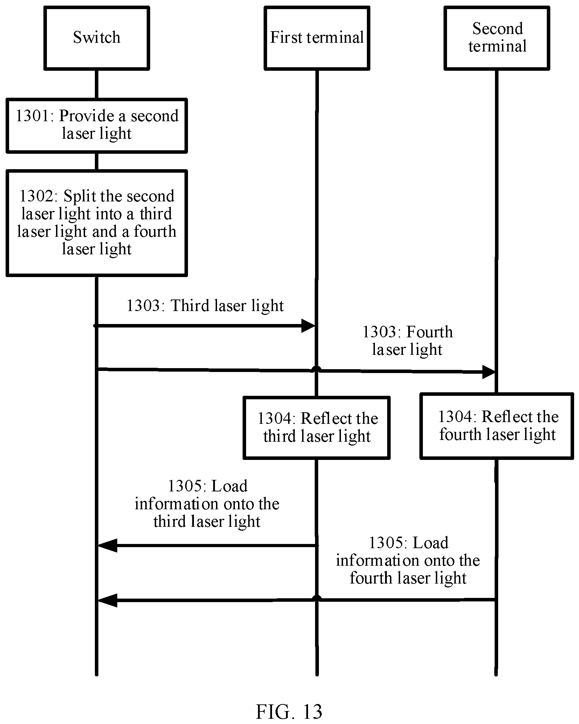

Refer to FIG. 13. The following describes a procedure of another communication method according to an embodiment of this application. The communication method is applicable to a switch.

1301: The switch provides a second laser light.

The second laser light is provided, where the second laser light may be used for transmitting information.

1302: The switch splits the second laser light into a third laser light and a fourth laser light.

After obtaining the second laser light, the second laser light is split into the third laser light and the fourth laser light.

1303: The switch sends the third laser light to a first terminal, and sends the fourth laser light to a second terminal.

After the third laser light and the fourth laser light are obtained, the third laser light is sent to the first terminal, and the fourth laser light is sent to the second terminal. It may be understood that, in this embodiment, the third laser light and the fourth laser light are the same as a fifth laser light.

1304: The first terminal reflects the third laser light, and the second terminal reflects the fourth laser light.

The first terminal reflects the third laser light, to enable the third laser light to be transmitted in a direction of the switch, and the second terminal reflects the fourth laser light, to enable the fourth laser light to be transmitted in the direction of the switch.

1305: The first terminal loads information onto the third laser light, and the second terminal loads information onto the fourth laser light.

The first terminal loads the information onto the third laser light, to obtain a third laser light onto which the information is loaded, and the second terminal loads the information onto the fourth laser light, to obtain a fourth laser light onto which the information is loaded. Therefore, transmission of an upstream signal is implemented.

It should be noted that the second laser light is continuously provided.

In this embodiment of this application, the switch provides a laser light for a terminal, to enable the terminal to load the information onto the laser light, to transmit the information to the switch. Therefore, a laser does not need to be disposed on the terminal. This reduces costs and power loss that are of the terminal.

In this specification, specific examples are used for describing principles and implementations of this application, and the description of embodiments is only intended to help understand the method and core idea of this application. In addition, a person of ordinary skill in the art may, based on the idea of this application, make modifications with respect to the specific implementations and the application scope. Therefore, the content of this specification shall not be understood as a limitation to this application.

## Claims

1. A switch, applied to a local area network, wherein the local area network comprises the switch, a first terminal, and a second terminal, the first terminal and the second terminal are connected to the switch, and the switch comprises a first laser and a first optical splitter, wherein
the first laser is configured to provide a first laser light; and
the first optical splitter is configured to split the first laser light into a first downstream laser light and a second downstream laser light, wherein the first downstream laser light is used for transmitting information to the first terminal, and the second downstream laser light is used for transmitting information to the second terminal.

2. The switch according to claim 1, wherein the switch further comprises a second laser and a second optical splitter, wherein
the second laser is configured to provide a second laser light; and
the second optical splitter is configured to split the second laser light into a third laser light and a fourth laser light, wherein the third laser light is transmitted to the first terminal, and the fourth laser light is transmitted to the second terminal;
the third laser light is used by the first terminal to load information onto the third laser light, to obtain a third laser light onto which the information is loaded;
the fourth laser light is used by the second terminal to load information onto the fourth laser light, to obtain a fourth laser light onto which the information is loaded; and
the third laser light onto which the information is loaded is used by the first terminal to transmit the information to the switch, and the fourth laser light onto which the information is loaded is used by the second terminal to transmit the information to the switch.

3. The switch according to claim 1 or 2, wherein the switch further comprises a first input/output block and a second input/output block, wherein
the first input/output block is configured to transmit the first downstream laser light to the first terminal, wherein no laser is disposed in the first input/output block; and
the second input/output block is configured to transmit the second downstream laser light to the second terminal, wherein no laser is disposed in the second input/output block; or
the first input/output block is configured to transmit the first downstream laser light to the first terminal, and transmit the third laser light to the first terminal, wherein no laser is disposed in the first input/output block; and
the second input/output block is configured to transmit the second downstream laser light to the second terminal, and transmit the fourth laser light to the second terminal, wherein no laser is disposed in the second input/output block.

4. The switch according to claim 3, wherein the switch further comprises a first heat dissipater and a second heat dissipater, wherein
the first heat dissipater is configured to dissipate heat for the first laser; and
the second heat dissipater is configured to dissipate heat for the second laser.

5. A switch, applied to a local area network, wherein the local area network comprises the switch and a terminal connected to the switch, and the switch comprises a second laser, wherein
the second laser is configured to send a second laser light to the terminal, wherein the second laser light is used by the terminal to load information onto the second laser light, to obtain a second laser light onto which the information is loaded, and the second laser light onto which the information is loaded is used by the terminal to transmit the information to the switch.

6. The switch according to claim 5, wherein the second laser continuously sends the second laser light.

7. A switch, applied to a local area network, wherein the local area network comprises the switch, a first terminal, and a second terminal, the first terminal and the second terminal are connected to the switch, and the switch comprises a second laser and a second optical splitter, wherein
the second laser is configured to provide a second laser light; and
the second optical splitter is configured to split the second laser light into a third laser light and a fourth laser light, wherein the third laser light is transmitted to the first terminal, and the fourth laser light is transmitted to the second terminal;
the third laser light is used by the first terminal to load information onto the third laser light, to obtain a third laser light onto which the information is loaded;
the fourth laser light is used by the second terminal to load information onto the fourth laser light, to obtain a fourth laser light onto which the information is loaded; and
the third laser light onto which the information is loaded is used by the first terminal to transmit the information to the switch, and the fourth laser light onto which the information is loaded is used by the second terminal to transmit the information to the switch.

8. The switch according to claim 7, wherein the second laser continuously sends the second laser light.

9. A terminal, comprising a reflective film and a signal modulation apparatus, wherein
the reflective film is configured to reflect a fifth laser light, to enable the fifth laser light to be transmitted to a switch, wherein the fifth laser light comes from the switch; and
the signal modulation apparatus is configured to load information onto the reflected fifth laser light, to obtain a fifth laser light onto which the information is loaded, wherein the fifth laser light onto which the information is loaded is used for transmitting the information to the switch.

10. The terminal according to claim 9, wherein the reflective film is disposed on a side of the signal modulation apparatus, and the signal modulation apparatus is an electro-absorption modulator or a microring.

11. A communication system, wherein the communication system comprises the switch according to any one of claims 1 to 4 and a terminal, and the switch is connected to the terminal.

12. A communication system, wherein the communication system comprises the switch according to claim 5 or 6 and the terminal according to claim 9 or 10, and the switch is connected to the terminal.

13. A communication system, wherein the communication system comprises the switch according to claim 7 or 8 and the terminal according to claim 9 or 10, and the switch is connected to the terminal.

14. A communication method, applied to a switch, wherein the switch is applied to a local area network, the local area network comprises the switch, a first terminal, and a second terminal, the first terminal and the second terminal are connected to the switch, and the method comprises:
providing a first laser light; and
splitting the first laser light into a first downstream laser light and a second downstream laser light, wherein the first downstream laser light is used for transmitting information to the first terminal, and the second downstream laser light is used for transmitting information to the second terminal.

15. The method according to claim 14, wherein the method further comprises:
providing a second laser light; and
splitting the second laser light into a third laser light and a fourth laser light, wherein the third laser light is transmitted to the first terminal, and the fourth laser light is transmitted to the second terminal;
the third laser light is used by the first terminal to load information onto the third laser light, to obtain a third laser light onto which the information is loaded;
the fourth laser light is used by the second terminal to load information onto the fourth laser light, to obtain a fourth laser light onto which the information is loaded; and
the third laser light onto which the information is loaded is used by the first terminal to transmit the information to the switch, and the fourth laser light onto which the information is loaded is used by the second terminal to transmit the information to the switch.

16. A communication method, applied to a switch, wherein the switch is applied to a local area network, the local area network comprises the switch and a terminal connected to the switch, and the method comprises:
sending a second laser light to the terminal, wherein the second laser light is used by the terminal to load information onto the second laser light, to obtain a second laser light onto which the information is loaded, and the second laser light onto which the information is loaded is used by the terminal to transmit the information to the switch.

17. The method according to claim 16, wherein the second laser light is continuously sent.

18. A communication method, applied to a switch, wherein the switch is applied to a local area network, the local area network comprises the switch, a first terminal, and a second terminal, the first terminal and the second terminal are connected to the switch, and the method comprises:
providing a second laser light; and
splitting the second laser light into a third laser light and a fourth laser light, wherein the third laser light is transmitted to the first terminal, and the fourth laser light is transmitted to the second terminal;
the third laser light is used by the first terminal to load information onto the third laser light, to obtain a third laser light onto which the information is loaded;
the fourth laser light is used by the second terminal to load information onto the fourth laser light, to obtain a fourth laser light onto which the information is loaded; and
the third laser light onto which the information is loaded is used by the first terminal to transmit the information to the switch, and the fourth laser light onto which the information is loaded is used by the second terminal to transmit the information to the switch.

19. The method according to claim 18, wherein the second laser light is continuously provided.

20. A communication method, applied to a terminal, wherein the method comprises:
reflecting a fifth laser light, to enable the fifth laser light to be transmitted to a switch, wherein the fifth laser light comes from the switch; and
loading information onto the reflected fifth laser light, to obtain a fifth laser light onto which the information is loaded, wherein the fifth laser light onto which the information is loaded is used for transmitting the information to the switch.
